# EUROPÄISCHE PATENTANMELDUNG

(11) **EP 4 202 234 A1**
(43) Veröffentlichungstag der Anmeldung: **28.06.2023**
(21) Anmeldenummer: 22214168.1
(22) Anmeldetag: 16.12.2022
(51) Int. Cl.: F16B 2/08, B62J 11/10

(54) **FIXIERELEMENT FÜR LEITUNGEN AN EINEM FAHRRADBAUTEIL**

(30) Priorität: 22.12.2021 DE 202021106982 U
(71) Anmelder: Canyon Bicycles GmbH, 56073 Koblenz (DE)
(72) Erfinder: Conradt, Mario, 56072 Koblenz (DE)
(74) Vertreter: dompatent von Kreisler Selting Werner - Partnerschaft von Patent- und Rechtsanwälten mbB

(57) **Zusammenfassung**

Ein Fixierelement für Leitungen wie eine Bremsleitung an einem Fahrradbauteil, insbesondere einem Gabelschaft weist einen Grundkörper (10) auf. Der Grundkörper (10) umgibt das Fahrradbauteil zumindest teilweist. Mit dem Grundkörper (10) ist ein Aufnahmeelement, insbesondere einstückig ausgebildet. Das Aufnahmeelement (14) dient zur Aufnahme zumindest einer Leitung, insbesondere der Bremsleitung. Zum Halten des Fixierelements, insbesondere an einem Gabelschaft sind vorzugsweise als Kabelbinder ausgebildete Halteelemente (20) vorgesehen.

## Beschreibung

Die Erfindung betrifft ein Fixierelement für Leitungen an einem Fahrradbauteil, insbesondere einem Gabelschaft.

Bei modernen Fahrrädern werden Bremsleitungen, Schaltzüge, elektrische Kabel und dergleichen häufig innerhalb der Fahrradbauteile, d.h. einerseits des Fahrradrahmens aber auch des Lenkers, des Vorbaus und des Gabelschafts angeordnet. So verlaufen beispielsweise Bremsleitungen für eine Vorderradbremse zumindest teilweise innerhalb des Steuerrohrs des Fahrradrahmens und sind von dort beispielsweise in den Gabelschaft geführt, um sodann im Bereich des Bremssattels aus dem Gabelbein der Fahrradgabel herausgeführt zu werden. Insbesondere im Bereich des Steuerrohrs des Rahmens und somit teilweise zwischen dem im Steuerrohr des Rahmens angeordneten Gabelschafts und dem Steuerrohr sind häufig mehrere Leitungen wie Bremsleitungen, Schaltzüge, Bowdenzügen oder auch elektrische Leitungen angeordnet. Aufgrund auftretender Vibrationen und Relativbewegungen sind die unterschiedlichen Leitungen, etc. einem erhöhen Verschleiß ausgesetzt. Insbesondere die zur Vorderradbremse führende vordere Bremsleitung, bei der es sich beispielsweise um einen Bowdenzug oder eine Hydraulikleitung handeln kann, wird während des Fahrens stark bewegt. So erfolgt beim Einschlagen des Lenkers ein Drehen der Gabel und somit auch ein Verdrehen der Bremsleitung.

Dies führt zur Reibung der Bremsleitung an den Kontaktpartnern, wie anderen Leitungen, dem Gabelschaft, dem Steuerrohr etc. Ferner besteht die Problematik, dass bei extremen Lenkeinschlägen ein Verklemmen oder Verkeilen der Bremsleitung mit anderem im Steuerrohr angeordneten Leitungen auftreten kann. Dies führt zu zusätzlichem Verschleiß.

Auch führt das Einschieben gegebenenfalls etwas zu langer Leitungen, beispielsweise nach dem Entfernen von unterhalb des Lenkervorbaus angeordneten Spacern zur ergonomischen Anpassung des Fahrrads zu Stauchungen von Leitungen innerhalb des Rahmens. Auch hierdurch kann ein Reiben der Leitungen vor allem am Steuerrohr auftreten.

Aufgabe der Erfindung ist es, die Gefahr von Beschädigungen von Leitungen zu verringern, die innerhalb von Fahrradbauteilen angeordnet sind.

Die Lösung der Aufgabe erfolgt durch ein Fixierelement mit dem Merkmal des Anspruchs 1.

Das erfindungsgemäße Fixierelement dient zum Fixieren von Leitungen wie Bremsleitungen, Schaltzügen, Bowdenzügen und dergleichen an einem Fahrradbauteil. Insbesondere dient das Fixierelement zum Fixieren einer Bremsleitung, die insbesondere als Hydraulikleitung oder Bowdenzug ausgebildet sein kann, wobei es sich insbesondere um die Fixierung der Bremsleitung für die Vorderradbremse handelt, da diese aufgrund der Lenkbewegung besonderen Belastungen ausgesetzt ist.

Das erfindungsgemäße Fixierelement weist einen Grundkörper auf, der ein Fahrradbauteil zumindest teilweise umgibt. Insbesondere ist der Grundkörper derart ausgebildet und angeordnet, dass er den Gabelschaft zumindest teilweise umgibt und insbesondere am Gabelschaft gehalten ist. Mit dem Grundkörper ist ein Aufnahmeelement verbunden. Das Aufnahmeelement dient zur Aufnahme zumindest einer Leitung. Bevorzugt ist es, dass das Aufnahmeelement einstückig mit dem Grundkörper ausgebildet ist. Des Weiteren weist das Fixierelement ein Halteelement auf, um den Grundkörper an dem Fahrradbauteil zu halten. In besonders bevorzugter Ausführungsform ist das Halteelement derart ausgebildet bzw. angeordnet, dass durch das Halteelement zusätzlich die Leitung fixiert wird. Das Halteelement hat somit in bevorzugter Weiterbildung der Erfindung eine Doppelfunktion und dient einerseits zur Fixierung des Grundkörpers am Fahrradbauteil und andererseits zur Fixierung der Leitung. Vorzugsweise erfolgt ein insbesondere klemmendes Halten des Grundkörpers an dem Fahrradbauteil, bei dem es sich insbesondere um den Gabelschaft handelt. Durch das erfindungsgemäße Fixierelement kann somit die Lage einer Leitung, insbesondere der Bremsleitung definiert werden. Dies ist insbesondere bei der Bremsleitung für die Vorderradbremse vorteilhaft, da hierdurch Bewegungen der Bremsleitung und der hiermit verbundene Verschleiß verringert ist.

Das Aufnahmeelement ist vorzugsweise derart ausgestaltet, dass es die zumindest eine Leitung zumindest teilweise umgibt. Hierdurch sind ein gutes Halten und eine definierte Lage der zumindest einen Leitung realisiert. Besonders bevorzugt ist es, dass das Aufnahmeelement genau eine Leitung aufnimmt und einen zumindest teil-kreisförmigen Querschnitt aufweist. Vorzugsweise umgibt das Aufnahmeelement in Umfangsrichtung die aufgenommene Leitung um mindestens 50% des Umfangs, insbesondere mindestens 70% des Umfangs.

Vorzugsweise erstreckt sich das Aufnahmeelement in Längsrichtung der zumindest einen Leitung, wobei es besonders bevorzugt ist, dass in montiertem Zustand die mindestens eine Leitung parallel zur Längsrichtung des Fahrradbauteils, insbesondere des Gabelschafts verläuft. Es ist jedoch auch möglich, eine beispielsweise schräge oder gekrümmte Ausgestaltung des Aufnahmeelements vorzusehen, um eine definierte Anordnung der Leitung an dem Fahrradbauteil zu realisieren.

In besonders bevorzugter Ausführungsform ist der Grundkörper schellenartig ausgebildet, so dass der Grundkörper ähnlich einer Schelle das entsprechende Fahrradbauteil, insbesondere den Gabelschaft umgibt. Hierbei ist es besonders bevorzugt, dass der Grundkörper einen insbesondere in Längsrichtung verlaufenden Schlitz aufweist, um ein klemmendes Befestigen des schellenartig ausgebildeten Grundkörpers zu realisieren. Bevorzugt ist es weiterhin, dass der Grundkörper zumindest teilweise aus elastisch verformbarem Material hergestellt ist und/oder gelenkig miteinander verbundene Teile aufweist. Beispielsweise kann die Verbindung von einem oder mehreren Einzelteilen des Grundkörpers durch Gelenke erfolgen. Dies hat den Vorteil, dass es beispielsweise möglich ist, den Grundkörper so weit zu öffnen bzw. aufzubiegen, dass dieser auch seitlich über das Fahrradbauteil, d.h. insbesondere senkrecht zur Längsrichtung des Fahrradbauteils auf diesem angeordnet werden kann und es insofern nicht unbedingt erforderlich ist, den Grundkörper in Längsrichtung des Fahrradbauteils auf diesen aufzustecken. Hierdurch ist die Montage vereinfacht.

In besonders bevorzugter Weiterbildung der Erfindung ist der Grundkörper und insbesondere auch das mit dem Grundkörper verbundene Aufnahmeelement klemmend an dem Fahrradbauteil durch das Halteelement fixiert.

In einer bevorzugten Weiterbildung der Erfindung weist der Grundkörper eine Innenkontur auf, die zumindest teilweise einer Außenkontur des Fahrradbauteils entspricht, an dem das erfindungsgemäße Fixierelement angeordnet wird. Insbesondere handelt es sich hierbei um die Außenkontur des Gabelschafts. Durch ein derartiges insbesondere flächiges Anliegen des Grundkörpers an dem Fahrradbauteil, kann ein sicheres Halten realisiert werden.

Vorzugsweise ist das Aufnahmeelement derart ausgebildet, dass es an einer nach innen weisenden Seite eine Öffnung aufweist. Diese erstreckt sich insbesondere über die gesamte Länge des Aufnahmeelements. Die Öffnung ist insofern ähnlich eines Schlitzes ausgebildet, der an seiner Außenseite von demjenigen Teil des Aufnahmeelements verschlossen ist, in dem die mindestens eine Leitung angeordnet ist. Insofern ist es möglich, ein Verjüngen des Innenumfangs des Grundkörpers zum klemmenden Fixieren an einem Fahrradbauteil auf einfache Weise im Bereich dieses Schlitzes bzw. dieser Längsöffnung des Aufnahmeelements zu realisieren. Gegebenenfalls kann der Grundkörper einen zusätzlichen Schlitz in einem anderen Bereich aufweisen, der sodann in bevorzugter Ausführungsform im Wesentlichen parallel zu der Öffnung im Aufnahmeelement verläuft.

Bei einer besonders bevorzugten Ausführungsform der Erfindung weist das Halteelement mindestens ein, insbesondere mindestens zwei Haltebänder auf. Diese umgeben in montiertem Zustand den Grundkörper in Umfangsrichtung. Bevorzugt ist es hierbei ferner, dass das mindestens eine Halteband auch das mit dem Grundkörper verbundene, insbesondere einstückig ausgebildete Aufnahmeelement umgibt. Zur insbesondere einfachen Montage ist es bevorzugt, dass das mindestens eine Halteband ein Verschlusselement aufweist. Hierdurch ist ein einfaches Verschließen eines im offenen Zustand vorzugsweise langgestreckten Haltebandes auf einfache Weise möglich. Besonders bevorzugt ist es, dass das mindestens eine Halteband entsprechend eines Kabelbinders, insbesondere als Kabelbinder ausgebildet ist.

Um eine exakte Lage des Halteelements, insbesondere des mindestens einen Haltebands zu definieren und ein Verrutschen zu vermeiden, ist es des Weiteren bevorzugt, dass das mindestens eine Halteband in einer insbesondere umlaufenden Nut angeordnet ist. Die Nut ist vorzugsweise an einer Außenseite des Grundkörpers gegebenenfalls des Aufnahmeelements angeordnet. Insbesondere ist je Halteband eine insbesondere umlaufende Nut vorgesehen.

Bei einer bevorzugten Weiterbildung weist das Aufnahmeelement zumindest eine Durchgangsöffnung auf. Diese ist insbesondere an einer Außenseite des Aufnahmeelements angeordnet oder stellt eine Durchgangsöffnung von außen in Richtung der Innenseite des Aufnahmeelements dar. Bevorzugt ist es, dass in dieser Durchgangsöffnung ein Halteelement, insbesondere ein Halteband angeordnet ist. Hierdurch drückt ein insbesondere als Halteband und besonders bevorzugt als Kabelbinder ausgebildetes Halteelement zusätzlich gegen die zu fixierende Leitung. Die Leitung wird somit zusätzlich durch das Halteband fixiert und in bevorzugter Ausführungsform gegen eine Außenseite des Fahrradbauteils gedrückt, da die Leitung im Bereich der Längsöffnung des Aufnahmeelements angeordnet ist.

Das erfindungsgemäße Fixerelement weist insbesondere in den bevorzugten Ausführungsformen den Vorteil auf, dass es sich um ein einfach zu montierendes Bauteil handelt. Insbesondere aufgrund der einfachen Befestigung am Gabelschaft, insbesondere über Kabelbinder, ist auf einfache Weise eine verdrehfeste und auch axial verrutschsichere Fixierung der Bremsleitung am Gabelschaft realisiert. Es handelt sich insbesondere um eine kostengünstige Lösung, durch die ferner auch ein Beschädigen durch Stauchen von Leitungen vermieden ist.

Besonders bevorzugt ist es, dass aufgrund der einfachen Ausgestaltung des Grundkörpers dieser an unterschiedliche Bauteile, an denen das Fixierelement angeordnet werden soll, angepasst werden kann. Insbesondere aufgrund der schellenartigen Ausgestaltung des Grundkörpers, kann dieser ohne Veränderung der Innenkontur auch an Gabelschaften mit unterschiedlichen Durchmessern angeordnet werden, da der Innendurchmesser aufgrund des vorhandenen Schlitzes, zumindest im Bereich einiger Millimeter auf einfache Weise angepasst werden kann.

Des Weiteren ist es möglich, dass mit dem Grundkörper mehrere Aufnahmeelemente verbunden sind, die beispielsweise einander gegenüberliegend oder an unterschiedlichen Außenbereichen des Grundkörpers angeordnet sind. Somit ist es möglich, mit einem einzigen Fixierelement gleichzeitig mehrere Leitungen, insbesondere am Gabelschaft in einem Abstand zueinander zu fixieren.

Nachfolgend wird die Erfindung anhand einer bevorzugten Ausführungsform unter Bezugnahme auf die anliegende Zeichnung näher erläutert.

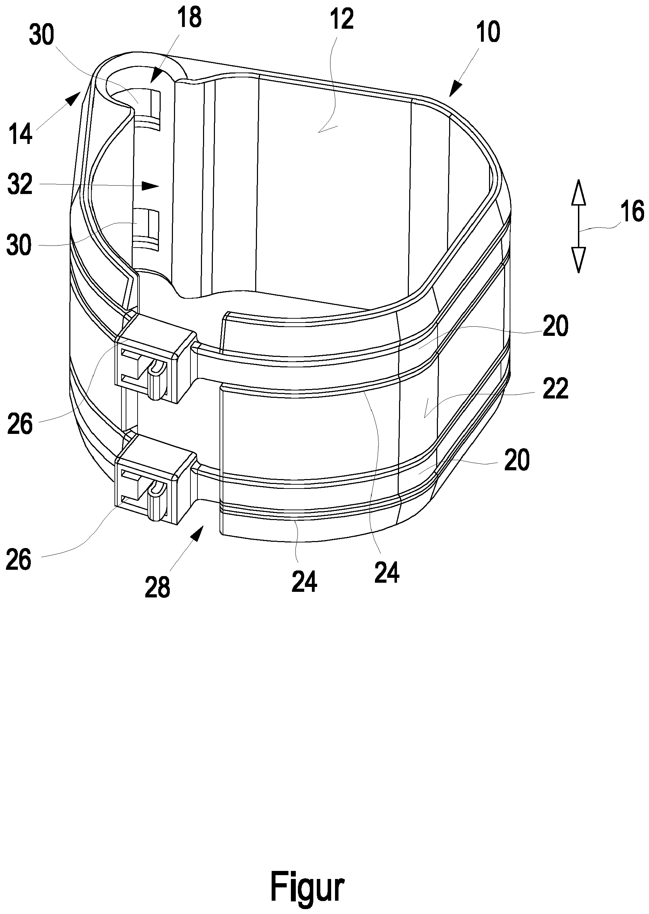

Die Figur zeigt eine schematische perspektivische Ansicht einer bevorzugten Ausführungsform des Fixierelements.

Das Fixierelement weist einen Grundkörper 10 auf, der im dargestellten Ausführungsbeispiel schellenartig ausgebildet ist und einen nicht dargestellten Gabelschaft am Umfang umgibt. Es ist daher bevorzugt, dass eine Innenkontur 12 des Grundkörpers zumindest teilweise der Außenkontur des Gabelschafts entspricht.

Der Grundkörper 10 ist im dargestellten Ausführungsbeispiel einstückig mit einem Aufnahmeelement 14 ausgebildet. Das Aufnahmeelement 14 erstreckt sich in Längsrichtung 16 des Grundkörpers über dessen gesamte Länge bzw. Höhe. Das Aufnahmeelement weist eine im Wesentlichen zylindrische, sich in Längsrichtung 16 erstreckende Öffnung 18 auf, in der eine zu fixierende Leitung, insbesondere eine Bremsleitung angeordnet wird.

Zur Fixierung des Grundkörpers zusammen mit dem einstückig ausgebildeten Aufnahmeelement 14 und somit zur Fixierung einer Leitung, weist das Fixierelement ein Halteelement auf. Dies ist im dargestellten Ausführungsbeispiel durch zwei Kabelbinder 20 realisiert. Die beiden Kabelbinder 20 umgeben den Grundkörper an eine Außenseite 22 und sind jeweils in einer Nut 24 angeordnet. Die beiden Kabelbinder 20 weisen jeweils ein Verschlusselement 26 auf.

Der Grundkörper 10 ist vorzugsweise vollständig aus elastischem Material hergestellt bzw. elastisch verformbar. Hierdurch ist es möglich mit Hilfe der Halteelemente 24 den Innenquerschnitt zu verringern. Hierzu weist der Grundkörper 10 einen sich über die gesamte Höhe in Längsrichtung 16 erstreckenden Schlitz 28 auf.

Die Tiefe der Nuten 24 sind im Bereich des Aufnahmeelements 18 vorzugsweise derart ausgebildet, dass hierdurch Durchgangsöffnungen 30 ausgebildet sind. In den Durchgangsöffnungen 30 sind die beiden Kabelbinder 24 angeordnet und fixieren somit gegebenenfalls eine innerhalb der Öffnung 18 des Aufnahmeelements 14 angeordnete Bremsleitung.

Insbesondere zur Verbesserung der Flexibilität weist das Aufnahmeelement an einer Innenseite eine Öffnung 32 auf. Diese erstreckt sich über die gesamte Höhe des Grundkörpers in Längsrichtung 16.

## Patentansprüche

1. Fixierelement für Leitungen an einem Fahrradrahmenbauteil, mit
einem das Fahrradrahmenbauteil, insbesondere den Gabelschaft zumindest teilweise umgebenden Grundkörper (10),
einem mit dem Grundkörper (10) verbundenen, insbesondere einstückig ausgebildeten Aufnahmeelement (14) zur Aufnahme zumindest einer Leitung und
einem Halteelement (20) zum Halten des Grundkörpers (10) an dem Fahrradbauteil und zum Halten der Leitung in dem Aufnahmeelement (14).

2. Fixierelement nach Anspruch 1, **dadurch gekennzeichnet, dass** das Aufnahmeelement (14) die zumindest eine Leitung zumindest teilweise umgibt.

3. Fixierelement nach Anspruch 2, **dadurch gekennzeichnet, dass** das Aufnahmeelement (14) genau eine Leitung aufnimmt und einen teil-kreisförmigen Querschnitt aufweist.

4. Fixierelement nach einem der Ansprüche 1 bis 3, **dadurch gekennzeichnet, dass** das Aufnahmeelement (14) sich in Längsrichtung (16) der zumindest einen Leitung erstreckt.

5. Fixierelement nach einem der Ansprüche 1 bis 4, **dadurch gekennzeichnet, dass** der Grundkörper (10) das Fahrradbauteil schellenartig umgibt.

6. Fixierelement nach einem der Ansprüche 1 bis 5, **dadurch gekennzeichnet, dass** der Grundkörper (10) insbesondere zur Befestigung am Fahrradbauteil elastisch verformbar ist.

7. Fixierelement nach einem der Ansprüche 1 bis 6, **dadurch gekennzeichnet, dass** der Grundkörper (10) durch das Halteelement (20) klemmend an dem Fahrradbauteil befestigbar ist.

8. Fixierelement nach einem der Ansprüche 1 bis 7, **dadurch gekennzeichnet, dass** der Grundkörper (10) eine Innenkontur (12) aufweist, die zumindest teilweise einer Außenkontur des Fahrradbauteils, insbesondere des Gabelschafts entspricht.

9. Fixierelement nach einem der Ansprüche 1 bis 8, **dadurch gekennzeichnet, dass** das Aufnahmeelement (14) eine nach innen weisende, sich insbesondere über die gesamte Länge (16) des Aufnahmeelements (14) erstreckende Öffnung (32) aufweist.

10. Fixierelement nach einem der Ansprüche 1 bis 9, **dadurch gekennzeichnet, dass** das Halteelement mindestens ein, insbesondere zwei Haltebänder (20) aufweist, die den Grundkörper (10) in Umfangsrichtung umgeben.

11. Fixierelement nach Anspruch 10, **dadurch gekennzeichnet, dass** das mindestens eine Halteband ein Verschlusselement (26) aufweist und insbesondere als Kabelbinder (20) ausgebildet ist.

12. Fixierelement nach Anspruch 10 oder 11, **dadurch gekennzeichnet, dass** das mindestens eine Halteband (20) in einer insbesondere umlaufenden Nut (24) angeordnet ist.

13. Fixierelement nach einem der Ansprüche 1 bis 12, **dadurch gekennzeichnet, dass** das Aufnahmeelement (14) eine Durchgangsöffnung (30) aufweist, in der das Halteelement, insbesondere ein Halteband (20) angeordnet ist.
